# EUROPÄISCHE PATENTSCHRIFT

(11) **EP 1 526 995 B1**
(45) Veröffentlichungstag und Bekanntmachung des Hinweises auf die Patenterteilung: **05.12.2007**
(21) Anmeldenummer: 03787663.8
(22) Anmeldetag: 15.07.2003
(51) Int. Cl.: B60T 13/66, B60T 11/224

(54) **HAUPTBREMSZYLINDEREINHEIT FÜR EINE ELEKTROHYDRAULISCHE FAHRZEUGBREMSANLAGE**
MASTER BRAKE CYLINDER UNIT FOR AN ELECTROHYDRAULIC VEHICLE BRAKE SYSTEM
ENSEMBLE CYLINDRE DE FREIN PRINCIPAL DESTINE A UN SYSTEME DE FREINAGE ELECTROHYDRAULIQUE DE VEHICULE

(30) Priorität: 25.07.2002 DE 10233838
(43) Veröffentlichungstag der Anmeldung: 04.05.2005
(73) Patentinhaber: ROBERT BOSCH GMBH, 70442 Stuttgart (DE)
(72) Erfinder: KUNZ, Michael, 70569 Stuttgart (DE)
(86) Internationale Anmeldenummer: PCT/DE2003/002368
(87) Internationale Veröffentlichungsnummer: WO 2004/016486

(56) Entgegenhaltungen:
- DE-A- 10 044 820
- DE-A- 10 119 128

## Beschreibung

### Stand der Technik

Die Erfindung betrifft eine Hauptbremszylindereinheit für eine elektrohydraulische Fahrzeugbremsanlage mit den Merkmalen des Oberbegriffs des Anspruchs 1.

Elektrohydraulische Fahrzeugbremsanlagen sind bekannt. DE10044820 offenbart beispielsweise eine Betätigungseinheit für eine elektrohydraulische Bremsanlage vom Typ "Brake by wire" mit einem Tandemhauptzylinder, dessen erster und zweiter Kolben durch jeweils eine Rückstellfeder entgegen der Betätigungsrichtung vorgespannt sind. Es sind sog. Fremdkraft-Bremsanlagen, bei denen die zum Bremsen benötigte Energie von einer Hydropumpe stammt, die von einem Elektromotor angetrieben wird. Üblicherweise fördert die Hydropumpe Bremsflüssigkeit in einen Hydrospeicher, an den unter Zwischenschaltung von Magnetventilen Radbremszylinder angeschlossen sind. Die Zwischenschaltung eines Hydrospeichers zur Speicherung von unter Druck stehender Bremsflüssigkeit hat den Vorteil, dass die Hydropumpe nicht ständig betrieben werden muss und trotzdem jederzeit unter Druck stehende Bremsflüssigkeit zum Bremsen zur Verfügung steht. Mit den Magnetventilen wird der Radbremsdruck in den Radbremszylindern geregelt.

Der Radbremsdruck in den Radbremszylindern wird in Abhängigkeit von einem Sollwert geregelt, der von einem Fahrer mit einem Fußbremspedal, einem Handbremshebel oder in anderer Weise vorgegeben wird.

Als Sollwertgeber findet vielfach eine Hauptbremszylindereinheit mit einem in einem Zylinder verschiebbaren ersten Kolben Verwendung wie sie von muskelkraftbetätigten hydraulischen Fahrzeugbremsanlagen her bekannt ist. Zur Ausbildung als Zweikreis- oder Tandemhauptbremszylindereinheit kann diese auch einen weiteren Kolben aufweisen. Die elektrohydraulische Fahrzeugbremsanlage ist unter Zwischenschaltung eines Trennventils für jeden Bremskreis an die Hauptbremszylindereinheit angeschlossen. Zum Bremsen wird durch Schließen der Trennventile die Hauptbremszylindereinheit hydraulisch von der übrigen Fahrzeugbremsanlage getrennt und die Fahrzeugbremsanlage wird fremdkraftbetätigt. Als Sollwert für den Radbremsdruck in den Radbremszylindern wird der durch Niedertreten eines Fußbremspedals oder Ziehen eines Handbremshebels in der Hauptbremszylindereinheit erzeugte Druck, die Kraft mit der das Fußbremspedal niedergetreten oder der Handbremshebel gezogen oder der Weg, um den das Fußbremspedal oder der Handbremshebel bewegt werden, herangezogen. Die zum Bremsen benötigte Energie wird also mit der Hydropumpe und nicht mit der Hauptbremszylindereinheit erzeugt. Bei einem Ausfall der Hydropumpe lässt sich die elektrohydraulische Fahrzeugbremsanlage wie eine Muskelkraft-Bremsanlage mit der Hauptbremszylindereinheit betätigen, die Trennventile bleiben in diesem Fall geöffnet. Die Verwendung einer Hauptbremszylindereinheit als Sollwertgeber einer elektrohydraulischen Fahrzeugbremsanlage hat den Zweck, die Fahrzeugbremsanlage bei Ausfall der Hydropumpe per Muskelkraft betätigen zu können.

Da zur Fremdkraftbremsung die Trennventile geschlossen werden lässt sich keine Bremsflüssigkeit aus dem Zylinder der Hauptbremszylindereinheit verdrängen und infolge dessen der erste Kolben nicht oder nur wenig verschieben, das Fußbremspedal oder ein sonstiges Betätigungsmittel lässt sich auch mit hoher Kraft nur um einen Bruchteil des üblichen Weges niedertreten.

Zur Simulation der gewohnten Abhängigkeit des Pedalwegs von der Pedalkraft sind sog. Pedalwegsimulatoren bekannt. Hierbei handelt es sich um einen Hydrospeicher, der an die Hauptbremszylindereinheit angeschlossen ist und in den Bremsflüssigkeit aus der Hauptbremszylindereinheit verdrängt werden kann. Der Hydrospeicher kann über ein Absperrventil an die Hauptbremszylindereinheit angeschlossen sein, das stromlos geschlossen ist und das zur Fremdkraftbremsung geöffnet wird. Ein solches Absperrventil vermeidet, dass bei einer Muskelkraftbremsung Bremsflüssigkeit aus der Hauptbremszylindereinheit in den Hydrospeicher verdrängt wird. Ein solches Absperrventil ist nicht zwingend notwendig und deswegen nicht in jedem Fall vorgesehen.

### Erläuterung und Vorteile der Erfindung

Die erfindungsgemäße Hauptbremszylindereinheit mit den Merkmalen des Anspruchs 1 weist außer dem ersten Kolben einen zweiten Kolben und eine Mitnehmereinrichtung auf, die nach Verschieben des ersten Kolbens um einen vorgegebenen Kolbenweg den zweiten Kolben mit dem ersten Kolben mitbewegt. Dabei ist die zum Verdrängen von Bremsflüssigkeit aus dem Zylinder wirksame Kolbenfläche des ersten und des zweiten Kolbens zusammen größer als eine zum Verdrängen von Bremsflüssigkeit aus dem Zylinder wirksame Kolbenfläche des ersten Kolbens allein. Es wird also beim gemeinsamen Verschieben des ersten und des zweiten Kolbens um einen bestimmten Weg ein größeres Bremsflüssigkeitsvolumen aus der Hauptbremszylindereinheit verdrängt als beim Verschieben nur des ersten Kolbens um denselben Weg. Der zweite Kolben der erfindungsgemäßen Hauptbremszylindereinheit darf nicht mit einem weiteren Kolben einer herkömmlichen Zweikreis- oder Tandemhauptbremszylindereinheit für eine Zweikreis-Fahrzeugbremsanlage verwechselt werden, der zweite Kolben der erfindungsgemäßen Hauptbremszylindereinheit ist ggf. zusätzlich zu einem solchen weiteren Kolben vorhanden. Im Unterschied zu einem weiteren Kolben einer Zweikreis- oder Tandemhauptbremszylindereinheit, der einen vom ersten Kolben unabhängigen Bremskreis beaufschlagt, beaufschlagt der zweite Kolben der erfindungsgemäßen Hauptbremszylindereinheit denselben Bremskreis wie der erste Kolben. Der zweite Kolben der erfindungsgemäßen Hauptbremszylindereinheit hat den Zweck, das pro Kolbenweg verdrängte Volumen an Bremsflüssigkeit zu vergrößern, wenn der erste Kolben um mehr als den vorgegebenen Kolbenweg verschoben worden ist. Der vorgegebene Kolbenweg, auf dem der erste Kolben ohne den zweiten Kolben im Zylinder verschoben wird ist zur Fremdkraftbetätigung der elektrohydraulischen Fahrzeugbremsanlage vorgesehen, bei der die Hauptbremszylindereinheit durch Schließen des oder der Trennventile hydraulisch von der übrigen Fahrzeugbremsanlage getrennt ist und ausschließlich als Sollwertgeber für die Bremskraft dient. Da der erste Kolben allein pro Kolbenweg weniger Bremsflüssigkeit verdrängt als der erste und der zweite Kolben zusammen ermöglicht die Erfindung einen kleineren Hydrospeicher als Pedalwegsimulator. Weiterer Vorteil der Erfindung sind ein schneller Druckaufbau durch den ersten Kolben und damit zusammenhängend eine verbesserte Fahrerbremswunscherkennung. Auch ein eventueller Lufteinschluss in der Hauptbremszylindereinheit über die Anhängigkeit des Hauptbremszylinderdrucks vom Kolbenweg ist verbessert.

Der zweite Kolben, der nach Überwindung des vorgegebenen Kolbenwegs mit dem ersten Kolben mitbewegt wird, vergrößert das pro Kolbenweg verdrängte Bremsflüssigkeitsvolumen und stellt dadurch ein ausreichendes Bremsflüssigkeitsvolumen bei einer Muskelkraftbetätigung der elektrohydraulischen Fahrzeugbremsanlage beim Ausfall der Hydropumpe sicher.

Die Unteransprüche haben vorteilhafte Ausgestaltungen und Weiterbildungen der im Anspruch 1 angegebenen Erfindung zum Gegenstand.

### Zeichnung

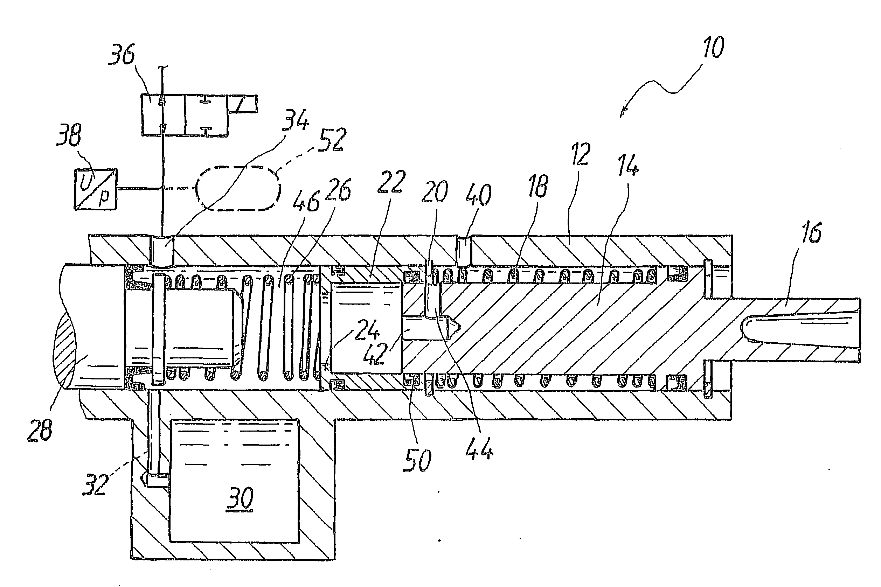

Die Erfindung wird nachfolgend anhand eines in der Zeichnung dargestelltem Ausführungsbeispiels näher erläutert. Die einzige Figur zeigt eine erfindungsgemäße Hauptbremszylindereinheit im Achsschnitt.

### Beschreibung des Ausführungsbeispiels

Die in der Zeichnung dargestellte, erfindungemäße Hauptbremszylindereinheit 10 ist für eine im übrigen nicht dargestellte elektrohydraulische Fahrzeugbremsanlage vorgesehen. Die Hauptbremszylindereinheit 10 weist einen Zylinder 12 und einen ersten Kolben 14 auf, der axial im Zylinder 12 verschiebbar ist. Die Verschiebung des ersten Kolbens 14 erfolgt in an sich bekannter Weise über eine Druckstange 16 beispielsweise mittels eines nicht dargestellten Fußbremspedals oder eines nicht dargestellten Handbremshebels. Am Zylinder 12 kann in an sich bekannter Weise ein Bremskraftverstärker, insbesondere ein UnterdruckBremskraftverstärker angebracht sein (nicht dargestellt). Ein solcher Bremskraftverstärker beeinflusst die Funktion der Hauptbremszylindereinheit 10 nicht.

Ein Außendurchmesser des ersten Kolbens 14 ist kleiner als ein Innendurchmesser des Zylinders 12, es besteht ein ringförmiger Zwischenraum zwischen dem ersten Kolben 14 und dem Zylinder 12, der erste Kolben 14 ist koaxial im Zylinder 12 angeordnet. Ein erstes Federelement 18 in Form einer Schraubendruckfeder stützt sich an einem in den Zylinder 12 eingesetzten Sicherungsring 20 ab und drückt den ersten Kolben 14 und die Druckstange 16 in eine Ausgangsposition.

Auf den ersten Kolben 14 ist ein zweiter Kolben 22 aufgesetzt, der rohrförmig ausgebildet ist und der den Zwischenraum zwischen dem ersten Kolben 14 und dem Zylinder 12 ausfüllt. Der zweite Kolben 22 dichtet zwischen dem Zylinder 12 und dem ersten Kolben 14 ab. Der zweite Kolben 22 weist einen nach Innen stehenden Flansch an seiner der Druckstange 16 abgewandten Seite auf, die eine der Druckstange 16 abgewandte Stirnfläche des ersten Kolbens 14 übergreift. In seiner in der Zeichnung dargestellten Ausgangsposition weist der Flansch einen axialen Abstand vom ersten Kolben 14 auf. Wird der erste Kolben 14 bei Betätigung der Hauptbremszylindereinheit 10 verschoben, bewegt er sich zunächst um einen vorgegebenen Kolbenweg, der dem axialen Abstand vom Flansch des zweiten Kolbens 22 entspricht, allein ohne den zweiten Kolben 22. Nach Überwindung dieses vorgegebenen Kolbenwegs stößt der erste Kolben 14 gegen den nach Innen stehenden Flansch des zweiten Kolbens 22 und bewegt dadurch den zweiten Kolben 22 beim weiteren Verschieben des ersten Kolbens 14 mit dem ersten Kolben 14 mit. Der nach Innen stehende Flansch des zweiten Kolbens 22 bildet einen Anschlag oder eine Mitnehmereinrichtung 24, die den zweiten Kolben 22 nach Überwinden des vorgegebenen Kolbenwegs durch den ersten Kolben 14 mit diesem mitbewegt.

In seiner Ausgangsposition liegt der zweite Kolben 22 an dem in den Zylinder 12 eingesetzten Sicherungsring 20 an. Ein zweites Federelement 26, das als Schraubendruckfeder ausgebildet ist, bewegt den zweiten Kolben 22 in seine Ausgangsposition. Das zweite Federelement 26 ist im Zylinder 12 zwischen dem zweiten Kolben 22 und einem weiteren Kolben 28 angeordnet. Der weitere Kolben 28, von dem in der Zeichnung lediglich ein dem ersten und dem zweiten Kolben 14, 22 zugewandtes Bruchstück dargestellt ist, ist ein sog. Schwimmkolben, wie er in herkömmlichen Hauptbremszylindern hydraulischer Fahrzeugbremsanlagen üblich und von dort bekannt ist. Der als Schwimmkolben ausgebildete weitere Kolben 28 trennt zwei Bremskreise der nicht dargestellten elektrohydraulischen Fahrzeugbremsanlage hydraulisch voneinander. Dies ist an sich bekannt und soll hier nicht näher erläutert werden. Durch das Vorsehen des weiteren Kolbens 28 ist die Hauptbremszylindereinheit 10 zu einer Zweikreis- oder Tandemhauptbremszylindereinheit 10 ausgebildet.

An einer Außenseite des Zylinders 12 ist ein Hydrospeicher angeordnet, der einen Pedalwegsimulator 30 bildet. Der Pedalwegsimulator 30 kommuniziert durch eine Bohrung 32 mit dem Zylinder 12. Da das Volumen des Pedalwegsimulators 30 aufgrund der kleinen wirksamen Fläche des ersten Kolbens 14 klein gehalten werden kann, kann auf eine Absperreinrichtung, die den Pedalwegsimulator 30 bei einer Verschiebung des zweiten Kolbens 22 hydraulisch von der Hauptbremszylindereinheit 10 trennt, verzichtet werden Der Pedalwegsimulator kann auch separat vom Zylinder 12 ausgebildet sein. Es kann anstelle des Pedalwegsimulators 30 beispielsweise ein mit in der Zeichnung mit Strichlinien angedeuteter, separater Hydrospeicher 52 als Pedalwegsimulator an den Druckanschluss 34 des Zylinders 12 angeschlossen sein.

An einen Druckanschluss 34 des Zylinders 12 ist in an sich bekannter Weise über ein Trennventil 36 die im übrigen nicht dargestellte elektrohydraulische Fahrzeugbremsanlage angeschlossen. Das Trennventil 36 ist ein in seiner unbestromten Grundstellung offenes Zwei/Zwei-Wege-Magnetventil. Des weiteren ist ein Drucksensor 38 an den Druckanschluss 34 des Zylinders 12 angeschlossen.

Durch eine Nachlaufbohrung 40 ist der Zylinder 12 an einen nicht dargestellten Bremsflüssigkeitsvorratsbehälter angeschlossen. Die Nachlaufbohrung 40 mündet in den Zwischenraum zwischen dem ersten Kolben 14 und dem Zylinder 12. Durch eine axiale Sackbohrung 42 und eine in diese mündende Querbohrung 44 im ersten Kolben 14 kommuniziert die Nachlaufbohrung 40 und damit der nicht dargestellte Bremsflüssigkeitsvorratsbehälter mit einem Druckraum 46 des Zylinders 12 auf einer der Druckstange 16 abgewandten Seite des ersten und des zweiten Kolbens 14, 22. Im Druckraum 46 ist das zweite Federelement 26 angeordnet, das den zweiten Kolben 22 in dessen Ausgangsposition drückt. Die Querbohrung 44 ist so im ersten Kolben 14 angebracht, dass sie nach einem kurzen Verschiebeweg des ersten Kolbens 14 eine Dichtung 50 des zweiten Kolbens 22 überfährt und dadurch verschlossen wird. Der nicht dargestellte Bremsflüssigkeitsvorratsbehälter wird dadurch nach einem kurzen Verschiebeweg des ersten Kolbens 14 hydraulisch vom Druckraum 46 getrennt.

Die Funktion der erfindungsgemäßen Hauptbremszylindereinheit 10 ist wie folgt: Zur Betätigung der nicht dargestellten elektrohydraulischen Bremsanlage wird beispielsweise mittels eines nicht dargestellten Fußbremspedals die Druckstange 16 und mit ihr der erste Kolben 14 verschoben. Zu Beginn der Verschiebung wird das Trennventil 36 geschlossen und dadurch die nicht dargestellte elektrohydraulische Fahrzeugbremsanlage hydraulisch vom Zylinder 12 getrennt. Der durch Verschiebung des ersten Kolbens 14 im Druckraum 46 erzeugte Druck wird mit dem Drucksensor 38 gemessen, er bildet einen Sollwert für einen mit der elektrohydraulischen Fahrzeugbremsanlage aufzubauenden Radbremsdruck in Radbremszylindern. Der Radbremsdruck wird mit einer nicht dargestellten, elektrisch angetriebenen Hydropumpe aufgebaut und mit Magnetventilen geregelt. Dies ist an sich bekannt und soll hier nicht weiter erläutert werden. Die Hauptbremszylindereinheit 10 dient als Sollwertgeber für den mit der elektrohydraulischen Fahrzeugbremsanlage aufzubauenden Radbremsdruck, der Radbremsdruck wird nicht mit der Hauptbremszylindereinheit 10 aufgebaut, diese ist durch das geschlossene Trennventil 36 hydraulisch von der elektrohydraulischen Fahrzeugbremsanlage getrennt.

Beim Verschieben verdrängt der erste Kolben 14 Bremsflüssigkeit aus dem Druckraum 46 des Zylinders 12 in den Pedalwegsimulator 30. Eine Verdrängung von Bremsflüssigkeit aus dem Druckraum 46 bei geschlossenem Trennventil 36 ist durch Elastizität des Zylinders 12 und Kompressibilität der Bremsflüssigkeit möglich. Reichen die Elastizität und die Kompressibilität nicht aus, kann der Pedalwegsimulator 30 beispielsweise mit einem gasdruckbeaufschlagten Membran oder mit einem federbeaufschlagten Kolben (nicht dargestellt) ausgebildet werden, dies ist an sich bekannt. Da eine beim Verdrängen von Bremsflüssigkeit wirksame Fläche des ersten Kolbens 14 aufgrund dessen kleinen Durchmessers klein ist, baut der erste Kolben 14 bei geringer Axialkraft einen hohen Druck auf. Es wird dadurch näherungsweise eine bei herkömmlichen Hauptbremszylindereinheiten übliche Abhängigkeit zwischen Axialkraft und Verschiebeweg des ersten Kolbens 14 und damit näherungsweise ein übliches Pedalgefühl beim Niedertreten des Fußbremspedals erzielt.

Auch zur Detektion von Luftblasen im Zylinder 12 ist der kleine Durchmesser des ersten Kolbens 14 und der dadurch bewirkte hohe Druckaufbau bei vergleichsweise kleiner Axialkraft auf den ersten Kolben 14 von Vorteil, da sich ein höherer Druckaufbau besser mit dem Drucksensor 38 messen lässt. Durch Messung des Druckaufbaus im Verdrängungsraum 46 und einen Verschiebeweg des ersten Kolbens 14 lässt sich ein Lufteinschluss im Zylinder 12 feststellen. Ist der Druckaufbau im Druckraum 46 bei einem bestimmten Verschiebeweg des ersten Kolbens 14 geringer als üblich, so lässt dies auf einen Lufteinschluss im Zylinder 12 schließen, wobei der Lufteinschluss 46 sowohl im dargestellten Druckraum 46 des ersten Bremskreises bzw. im Pedalwegsimulator 30 als auch im in der Zeichnung nicht dargestellten Druckraum des zweiten Bremskreises sein kann.

Aufgrund des kleinen Durchmessers des ersten Kolbens 14 und damit der kleinen beim Verdrängen von Bremsflüssigkeit wirksamen Kolbenfläche ist das vom ersten Kolben 14 verdrängte Bremsflüssigkeitsvolumen gering und es genügt infolge dessen ein kleiner Pedalwegsimulator 30. Dies verringert die Baugröße.

Bei Ausfall der elektrohydraulischen Fahrzeugbremsanlage wird das Trennventil 36 bei Betätigung der erfindungsgemäßen Hauptbremszylindereinheit 10 nicht geschlossen. Bei der Betätigung wird der erste Kolben 14 zunächst so weit verschoben, bis er an den die Mitnehmereinrichtung 24 bildenden nach Innen stehenden Flansch des zweiten Kolbens 22 stößt. Beim weiteren Verschieben des ersten Kolbens 14 bewegt dieser über die Mitnehmereinrichtung 24 den zweiten Kolben 22 mit. Die wirksame Kolbenfläche ist dadurch auf die Summe der Kolbenflächen beider Kolben 14, 22 und damit auf eine Innenquerschnittsfläche des Zylinders 12 vergrößert. Durch die gemeinsame Verschiebung des ersten und des zweiten Kolbens 14, 22 wird also pro Kolbenweg ein entsprechend größeres Bremsflüssigkeitsvolumen aus dem Zylinder 12 verdrängt. Dadurch ist eine Betätigung der elektrohydraulischen Fahrzeugbremsanlage per Muskelkraft in von hydraulischen Fahrzeugbremsanlagen her bekannter Weise möglich. Die Muskelkraft kann mit einem an sich bekannten, nicht dargestellten Bremskraftverstärker, insbesondere einem Unterdruckbremskraftverstärker verstärkt werden.

## Patentansprüche

1. Hauptbremszylindereinheit (10) für eine elektrohydraulische Fahrzeugbremsanlage, mit einem in einem Zylinder verschiebbaren ersten Kolben (14) und mit einem Pedalwegsimulator (30), der mit dem Zylinder kommuniziert, und mit einem zweiten Kolben, **dadurch gekennzeichnet, dass** die Hauptbremszylindereinheit (10) eine Mitnehmereinrichtung (24) aufweist, die nach Verschieben des ersten Kolbens (14) um einen vorgegebenen Kolbenweg den zweiten Kolben (22) mit dem ersten Kolben (14) mitbewegt und dass eine zum Verdrängen von Bremsflüssigkeit aus dem Zylinder (12) wirksame Kolbenfläche beider Kolben (14, 22) zusammen größer als eine zum Verdrängen von Bremsflüssigkeit aus dem Zylinder (12) wirksame Kolbenfläche des ersten Kolbens (14) ist.

2. Hauptbremszylindereinheit nach Anspruch 1, **dadurch gekennzeichnet, dass** der erste Kolben (14) im zweiten Kolben (22) einliegt.

3. Hauptbremszylindereinheit nach Anspruch 1, **dadurch gekennzeichnet, dass** die Mitnehmereinrichtung (24) einen Anschlag aufweist, der nach Verschieben des ersten Kolbens (14) um den vorgegebenen Weg den zweiten Kolben (22) mit dem ersten Kolben (14) mitnimmt.

4. Hauptbremszylindereinheit nach Anspruch 1, **dadurch gekennzeichnet, dass** bei nicht betätigter Hauptbremszylindereinheit (10) der Zylinder (12) mit einem Bremsflüssigkeitsvorratsbehälter kommuniziert und dass der Bremsflüssigkeitsvorratsbehälter durch eine kurze Verschiebung des ersten Kolbens (14) vom Zylinder (12) getrennt wird.

5. Hauptbremszylindereinheit nach Anspruch 1, **dadurch gekennzeichnet, dass** die Hauptbremszylindereinheit (10) als Tandemhauptbremszylindereinheit (10) für eine Zweikreisfahrzeugbremsanlage ausgebildet ist.

## Claims

1. Brake master cylinder unit (10) for an electrohydraulic vehicle brake system, having a first piston (14) which can be displaced in a cylinder and having a pedal travel simulator (30) which communicates with the cylinder, and having a second piston, **characterized in that** the brake master cylinder unit (10) has a driver device (24) which, after displacement of the first piston (14) by a predefined piston travel, drives the second piston (22) with the first piston (14), and **in that** a piston face of both pistons (14, 22) together which acts to displace brake fluid from the cylinder (12) is larger than a piston face of the first piston (14) which acts to displace brake fluid from the cylinder (12).

2. Brake master cylinder unit according to Claim 1, **characterized in that** the first piston (14) lies inside the second piston (22).

3. Brake master cylinder unit according to Claim 1, **characterized in that** the driver device (24) has a stop which, after displacement of the first piston (14) by the predefined piston travel, drives the second piston (22) with the first piston (14).

4. Brake master cylinder unit according to Claim 1, **characterized in that**, if the brake master cylinder unit (10) is not actuated, the cylinder (12) communicates with a brake fluid reservoir, and **in that** the brake fluid reservoir is separated from the cylinder (12) by a short displacement of the first piston (14).

5. Brake master cylinder unit according to Claim 1, **characterized in that** the brake master cylinder unit (10) is configured as a tandem brake master cylinder unit (10) for a dual-circuit vehicle brake system.

## Revendications

1. Unité de maître-cylindre de frein 10 pour un système de frein électro hydraulique de véhicule comprenant un premier piston 14 coulissant dans un cylindre et un simulateur de course de pédale 30 communiquant avec le cylindre et avec un second piston,
**caractérisée en ce que**
l'unité de maître-cylindre 10 comporte une installation d'entraînement 24 qui, après coulissement du premier piston 14 d'une course de piston prédéterminée, entraîne le second piston 22 avec le premier piston 24 ; et
la surface active des deux pistons 14, 22 pour refouler le liquide de frein hors du cylindre 12 est en combinaison plus grande qu'une surface du premier piston 14 qui fonctionne pour refouler le liquide de frein hors du cylindre 12.

2. Unité de maître-cylindre de frein selon la revendication 1,
**caractérisée en ce que**
le premier piston 14 est logé dans le second piston 22.

3. Unité de maître-cylindre de frein selon la revendication 1,
**caractérisée en ce que**
l'installation d'entraînement 24 comporte une butée qui, après coulissement du premier piston 14, entraîne sur une course prédéfinie, le second piston 22 avec le premier piston 14.

4. Unité de maître-cylindre de frein selon la revendication 1,
**caractérisée en ce que**
lorsque l'unité de maître-cylindre 10 n'est pas actionnée, le cylindre 12 communique avec un réservoir de liquide de frein et ce réservoir est coupé du premier cylindre 12 par un court déplacement du piston 14.

5. Unité de maître-cylindre de frein selon la revendication 1,
**caractérisée en ce que**
l'unité de maître-cylindre de frein 10 est réalisée comme unité de maître-cylindre de frein tandem 10 pour une installation de frein de véhicule à deux circuits.
